# EUROPÄISCHE PATENTSCHRIFT

(11) **EP 0 597 285 B1**
(45) Veröffentlichungstag und Bekanntmachung des Hinweises auf die Patenterteilung: **09.08.1995**
(21) Anmeldenummer: 93116914.8
(22) Anmeldetag: 20.10.1993
(51) Int. Cl.: B62B 3/00

(54) **Verwaltungseinrichtung für Schubgepäckwagen**
Management device for luggage trolleys
Appareil pour gérer de chariots à baggage

(30) Priorität: 09.11.1992 DE 4237729
(43) Veröffentlichungstag der Anmeldung: 18.05.1994
(73) Patentinhaber: EXPRESSO DEUTSCHLAND TRANSPORTGERÄTE GmbH, D-34123 Kassel (DE)
(72) Erfinder: Schornstein,Axel, D-34292 Ahnatal-Weimar (DE)
(74) Vertreter: Schön, Theodor, Patent- und Zivilingenieur

(56) Entgegenhaltungen:
- EP-A- 0 435 225
- DE-A- 3 932 550
- US-A- 4 288 689
- PATENT ABSTRACTS OF JAPAN vol. 014, no. 218 (E-0925)9. Mai 1990 & JP-A-02 052 532 (KANDA TSUSHIN KOYGO CO LTD) 22. Februar 1990 *

## Beschreibung

Die Erfindung bezieht sich auf eine Verwaltungseinrichtung für Schubgepäckwagen, insbesondere in weitläufigen und unübersichtlichen, aber mit einem Telefonnetz ausgestatteten Anlagen, wie Flughäfen, Bahnhöfen und dergl., in welchen für die Passagiere ankommender Massenverkehrsmittel jeweils am Ankunftsort und zur Ankunftszeit des Massenverkehrsmittels eine ausreichende Anzahl von Schubgepäckwagen zum Transport ihres Gepäckes zum Individualverkehrsmittel bereitgestellt werden muß.

Insbesondere Flughäfen sind hinsichtlich der von den Passagieren zu benutzenden Einrichtungen bzw. Anlagenbereiche außerordentlich weitläufige und unübersichtliche Anlagen, was nicht zuletzt aus dem Umstand resultiert, daß gerade Flughäfen meist außerhalb des Stadtbereiches angesiedelt und daher im Unterschied zu den meistens im Stadtzentrum ligenden Bahnhöfen mit umfangreichen Parkanlagen für die Fluggäste ausgestattet sind.
Andererseits ergibt sich aus dem modernen Flugverkehr mit Großraumflugzeugen auch auf Flughäfen das Problem des Massenverkehrs, dahingehend daß zum einen ankommende und abgehende Flugzeuge hunderte von Passagieren samt Gepäck aufzunehmen vermögen und daß sich zum Anderen das Passagieraufkommen an Flughäfen immer mehr aus Turisten oder Urlaubern mit einem verhältnismäßig umfangreichen Gepäck zusammensetzt, woraus letztlich die Notwendigkeit, jedem ankommenden Passagier einen Schubgepäckwagen zum Transport seines Gepäckes von der Ausgabestelle zu dem von ihm gewälhten Weitertransportmittel, sei es nun ein in einem Parkhaus oder dergl. geparktes Privatauto oder sei es ein öffentliches Nahverkehrsmittel, wie Straßen-bzw. U-Bahn oder Bus, orts- und zeitgerecht zur Verfügung zu stellen, resultiert.

Im herkömmlichen Betrieb von Flug-oder Bahnhöfen wird die Aufgabe, wenigstens jedem mit dem Massenverkehrsmittel ankommenden Passagier am Flug-oder Bahnsteig zeit- und ortsgerecht einen Schubgepäckwagen zur Verfügung zu stellen in der Weise mehr oder minder zufriedenstellend gelöst, daß eine größere Anzahl von Bediensteten, von gewissen Erfahrungswerten abgesehen, planlos zugleich oder nacheinander in einige oder alle Bereiche der jeweiligen Anlage, Bahnhof oder Flughafen gesandt wird, mit dem Auftrag alle dort abgestellten Schubgepäckwagen einzusammeln und zu einer vorgegebenen Sammelstelle, insbesondere zu dem Bahn-oder Flugsteig an dem das nächstfolgend ankommende Massenverkehrsmittel ankommt, zu bringen. Da hierbei Zeit und Ort der Ankunft sowie Anzahl der mit dem Massenverkehrsmittel, Zug oder Flugzeug, ankommenden Passagiere bekannt sind kann zwar die Anzahl der erfoderlichen Schubgepäckwagen einigermaßen genau vorherbestimmt werden, völlig unbekannt ist aber der momentane Standort der einzelnen an sich vorhandenen Schubgepäckwagen, so daß den dafür zuständigen Bediensteten der Bereitstellungsauftrag jeweils mit einem so erheblichen zeitlichen Vorlauf erteilt werden muß, daß die Bereitsstellung der Schubgepäckwagen auch unter Berücksichtigung eines beträchtlichen Zeitaufwandes für das Aufsuchen der über die Anlage hin verstreut abgestellten Schubgepäckwagen noch zeitgerecht erfolgen kann. Eine weitere Schwierigkeit ergibt sich dabei ferner auch aus der Tatsache, daß beim herkömmlichen Betrieb gewöhnlich auch nicht bekannt ist, wieviele Schubgepäckwagen sich an den einzelnen Sammelstellen, die in der Regel mit den Ankunftsstellen der Massenverkehrsmittel, also Flug-oder bahnsteig, identisch sind, bereits vorhanden sind. Dabei ist zu berücksichtigen, daß die Schubgepäckwagen im Ankunftsbereich es Massenverkehrsmittels häufig nur gegen einen gewissen Pfandbetrag ausgegeben werden und daher auch ein gewisser Anreiz zum Zurückbringen des Schubgepäckwagens zur Ausgabestelle, also zum Flug-oder Bahnsteig durch den einzelnen Benutzer vorhanden ist. Unter Berücksichtigung dieser Gegebenheiten könnte also auch bereits ein Verbringen einer Anzahl von Schubgepäckwagen von einem Sammelort zu einem anderen ausreichend sein, um die benötigte Anzahl von Schubgepäckwagen an einem vorgegebenen Ort zeit-und ortsgerecht zur Verfügung zu stellen, so daß sich, in diesem Falle ohnehin wenig erfolgreiche, Such-und Sammelaktionen der zuständigen Bediensteten in den anderweitigen Bereichen der Anlage von vorneherein erübrigen.
Aus alledem ergibt sich, daß auf Flughäfen und Bahnhöfen oder dergl. Ankunftsorten von mehr oder minder regelmäßig verkehrenden Massentransportmitteln, wie Fugzeug oder Zug, zum einen eine über den tatsächlichen Bedarf weit hinausgehende Anzahl von Schubgepäckwagen vorhanden sein muß und daß zum anderen eine beträchtliche Anzahl von Bediensteten erforderlich ist, um eine zeit-und ortsgerechte Bereitstellung einer der Anzahl der jeweils mit dem Massenverkehrsmittel ankommenden Passagiere entsprechenden Anzahl von Schubgepäckwagen auch tatsächlich sicher stellen zu können.

Zur Standortortung und Informationsübermittlung, z.B. für in den Verkaufsräumen von Supermärkten oder dergl. Anlagen befindliche Einkaufswagen bestimmte und aus stationären Sender-/Empfängereinheiten sowie an den einzelnen Einkaufswagen angeordneten mobilen Empfänger-/Sendereinheiten bestehende Anlagen, die, wie beispielsweise die aus der EP-OS 435 225 bekannte Anlage mittels Infrarotstrecken betrieben werden könnten an sich zwar auch zur Standortortung von Schubgepäckwagen auf Flughäfen oder Bahnhöfen und dergl. eingesetzt werden, sind für diesen Zweck aber praktisch nit realisierbar, da die Installation eines zum Betrieb derartiger Anlagen unerläßlichen Leitungsnetzes angesichts der Weitläufigkeit von Flugplätzen oder Bahnhöfen und vor allem der diesen zugeordneten und als Standort der zu ermittelnden Schubgepäckwagen vorzugsweise infrage kommenden Parkplätze zu einem nicht tragbaren wirtschaftlichen Aufwand führen würde. Darüberhinaus erfordert die bekannte Anlage auch noch die Ausstattung der mobilen, an den einzelnen xEinkaufswagen angeordneten Empfänger-/Sendereinheiten mit einer eigenen Energiequelle, was den für die Installation eines solchen Systemes erforderlichen Aufwand noch weiter vergrößert, ganz abgesehen davon, daß auch die Überwachung der Aufladung der an den einzelnen Wagen angeordneten Energiequellen einen erheblichen personellen Aufwand erfordert.

Desgleichen sind auch stationäre Einrichtungen zur Erkennung entlang einer vorbestimmten Bahn bewegbarer Wagen, wie sie beispielsweise aus der US-PS 4 288 689 bekannt sind zur Lösung der hier anstehenden Problematik ungeeignet, da auf Flugplätzen oder Bahnhöfen benutzte Schubgepäckwagen nicht entlang einer vorbestimmten Bahn, sondern den individuellen Bedürfnissen der Benutzer entsprechend regellos innerhalb des gesamten Geländes bzw. innerhalb der gesamten weitläufigen Anlage bewegt werden. Außerdem kommt es bei einer Standortermittlung regellos innerhalb einer Anlage stehen gelassener Schubgepäckwagen gar nicht auf die Erkennung bzw. Identifizierung der einzelnen Wagen an, wie dies bei der der US-PS 4 288 689 zugrundeliegenden Problematik der Fall ist, vielmehr genügt es eine Erkenntnis darüber zu gewinnen, in welchem Bereich der Anlage sich gerade eine eine Rückholaktion rechtfertigende Vielzahl von Schubgepäckwagen befindet. Eine Möglichkeit zu einer wenigstens bereichsweise flächendeckenden Erfassung der Anzahl innerhalb eines bestimmten Bereiches befindlicher Wagen läßt sich aus der durch die US-PS 4 288 689 bekannt gewordenen Fahrzeugidentifikationsmethode nicht ableiten.

Die DE-A-39 32 550 zeigt ein Leitsystem zur Übermittlung von Informationen an individuelle Transportwagen z.B. in einen Flughafen
Die JP-A-2052532 zeigt ein Leitsystem zur Erfassung der Positionen von Wagen mittels kodierter Signale, die über ein Kabel an eine zentrale Anlage gesendet werden.

Eine weitere, mit keiner bekannten Anlagen oder Methoden lösbare Problematik liegt in der Tatsache, daß Schubgepäckwagen grundsätzlich nur gegen Pfandgeld ausgegeben werden und zu diesem Zweck üblicherweise in mit einem Pfandmünzautomaten ausgestatteten Depots bevorratet werden. Bei der herkömmlichen Art der Ausgabe von Schubgepäckwagen gegen ein Geldpfand, gemäß welcher mit Hilfe eine Automaten einerseits Schubgepäckwagen nur gegen Abgabe eines Geldpandes an den Automaten aus einer gegen unbefugtes Entnehmen gesicherten Sammelstelle ausgegeben werden und bei Rückführung eines Schubgepäckwagens in die Sammelstelle das hinterlegte Geldpfand durch den Automaten wieder zurückgegeben wird, besteht ferner auch die Gefahr des Mißbrauches des Automaten, dahingehend, daß dem Automaten gegenüber mit Hilfe von Manipulationen eine Rückführung von Schubgepäckwagen simuliert und dieserart eine unberechtigte Pfandgeldrückgabe durch den Automaten ausgelöst werden kann. Neben dieser auf eine unzulängliche Absicherung gegenüber zweifelsfrei kriminellen Absichten und Handlungen zurückzuführenden Unzulänglichkeiten der bekannten Automaten ergibt sich jedoch auch die Tatsache, daß herkömmliche Automaten für eine zuverlässige Feststellung der Anzahl der in der Sammelstelle momentan enthaltenen Schubgepäckwagen wenig geeignet sind.

Ausgehend von der vorstehend dargelegten Problematik umfaßt die der Erfindung zugrundeliegende Aufgabenstellung die Schaffung einer Verwaltungseinrichtung für die Summe der in einer weitläufigen Anlage mit einer Vielzahl von Sammel-oder Bereitstellungsstellen, wie Bahnhof oder Flughafen, insgesamt vorhandenen Schubgepäckwagen mit dem Ziel neben einer orts-und zeitgerechten Bereitstellung jeweils einer ausreichenden Anzahl von Schubgepäckwagen eine möglichst weitgehende Anpassung der insgesamt zu bevorratenden Schubgepäckwagen an das tatsächliche Passagieraufkommen und ferner einer möglichst weitgehenden Verringerung der Anzahl der für eine orts-und zeitgerechte Bereitstellung der jeweils erfoderlichen Anzahl von Schubgepäckwagen erforderlichen Bedientsteten, wobei gleichzeitig auch eine kriminelle Manipulation der Pfandgeld-Automaten weitgehendst ausgeschlossen und wobei zudem die Installation sowie der Betrieb der Verwaltungseinrichtung mit einem geringstmöglichen Aufwand gewährleistet sein sollen.

Diese Aufgabe wird erfindungsgemäß im Wesentlichen dadurch gelöst, daß daß jeder Schubgepäckwagen mit einer passiven, als kodierbare Kompakteinheit, z.B. auf einer Platine angeordneten, insbesondere als sog. Chip, ausgebildeten Empfänger-/ Sendereinheit, deren Senderteil zur Abgabe lediglich eines einzigen Erkennungs-Signales ausgestattet ist und daß die Gesamtfläche der Anlage in einzelne Bereiche unterteilt ist, deren jede mit einem stationären, an eine Fernsprecheinrichtung bzw. deren Leitungsnetz angeschlossenen Sender-/Empfänger ausgestattet ist, wobei die Sender-/ Empfänger der einzelnen Bereiche vermittels des Fernsprechleitungsnetzes an eine zentrale Datenerfassungs- und verarbeitungsanlage angeschlossen sind.
Durch die Verwendung innerhalb der Anlage ohnehin vorhandener Leitungsnetze, insbesondere des Telefonnetzes kann die erfindungsgemäße Verwaltungseinrichtung mit einem geringstmöglichen technischen und wirtschaftlichen Aufwand in praktisch jeder bestehenden Anlage installiert werden, wobei es allerdings zweckmäßig erscheinzwischen die Sender-/Empfängereinheiten der einzelnen Bereiche der Anlage und das den Weitertransport der Signale zur Datenerfassungs-und verarbeitungsanlage vermittelnde Leitungsnetz jeweils eine V24 Schnittstelle einzuschalten.
Im Einzelnen sieht die Erfindung hierbei weiterhin vor, daß die bordeigenen Empfänger-/Sendereinheiten der Schubgepäckwagen mit einer Einrichtung zur Umsetzun eingehender Funkwellenenergie in eine Energieversorgung für den Senderteil ausgestattet und der Senderteil der bordeigenen Empfänger-/Sendereinheit eines jeden Schubgepäckwagens auf die Abstrahlung eines einzigen kodierten und jeweils lediglich für diesen einen Schubgepäckwagen charakteristischen Erkennungs-Funksignales beschränkt ist. Diese Beschränkung der Antwortsignale der Empfänger-/Sendereinheit des einzelnen Schubgepäckwagens auf lediglich ein vorzugsweise seine Identität charakterisierendes kurzes Signal ermöglicht auch die Verwendung dieses Signales zur Aktivierung der Pfandgeldrückgabe der an den Sammelstellen aufgestellten Automaten, so daß zumindest in Verbindung mit einer geschützten Unterbrigung der Chips innerhalb des Rahmens des Schubgepäckwagens eine kriminelle Manipulation zur Veranlassung einer Pfandgeldrückgabe zumindest weitgehendst ausgeschlossen ist.

Der zentrale Teil der Verwaltungseinrichtung besteht zweckmäßigerweise aus einer elektronischen Datenerfassungsanlage in der die Antwortsignale sämtlicher Schubgepäckwagen erfaßt und einem Rechner zugeleitet werden, der gegebenenfalls die Summen der Antworsignale der ein- und ausfahrenden Wagen jeden einzelnen Bereiches der Gesamtanlage miteinander in Beziehung setzt und daraus eine Anzeige für die Anzahl der momentan in jedem einzelnen der Bereiche der Gesamtanlage bzw. in den einzelnen Sammelstellen momentan befindlichen Schubgepäckwagen erarbeitet. Der Rechner kann dabei aus einem handelsüblichen PC, d.h. einem üblichen Bildschirmarbeitsplatz bestehen und darüberhinaus so eingerichtet sein, daß er historische, d.h. bereits einmal abgefragte oder durch Zeitablauf überholte Abfrageergebnisse entweder automatisch löscht oder aber einem Statistik-Speicher zuführt. Insbesondere ist vorgesehen, daß in dem den zentralen Teil der Verwaltungeinrichtung bildenden Rechner zugleich auch die Fahr-oder Flugpläne des Massenverkehrsmittels gespeichert sind, derart, daß der Rechner über den Bildschirm zugleich auch eine Anzeige dafür ausgeben kann, wieviele Schubgepäckwagen zu welcher Zeit an welchem Ort, Fahr-oder Flugsteig, benötigt werden.

Im übrigen kann die Ausstattung des zentralen Teiles der Verwaltungseinrichtung beliebig erweitert und zur Erfassung und Anzeige weiterer, für die Verwaltung oder aber z.B. auch die Abberufung der Schubgepäckwagen zu in regelmäßigen Abständen erforderlichen Wartungsarbeiten oder dergl. ausgestattet sein.
Im Rahmen der Datenerfassung in der Erfassungseinrichtung oder im Rahmen der Datenverarbeitung in der Recheneinheit wird jedes von einem Schubgepäckwagen eingehende Antwortsignal zweckmäßigerweise mit einem Uhrzeit Signal versehen, um einerseits jeweils die Anzeige des momentan gerade aktuellen Verteilungsstandes der einzelnen Schubgepäckwagen sicher zu stellen und andererseits ein Auswahlkriterium für die aus dem Speicher der Recheneinheit zu löschenden Daten zu erreichen. Selbstverständlich können die Antwortsignale der einzelnen Schubgepäckwagen auch an anderer Stelle mit einem Zeitsignal ergänzt werden, beispielsweise bereits in der Sender-/Empfängereinheit, falls diese entsprechend ausgestattet ist.

In der nachfolgenden Beispielsbeschreibung sind anhand in der Zeichnung dargestellter schematischer Ausführungsbeispiele einige Verwirklichungsmöglichen für eine Verwaltungseinrichtung für Schubgepäckwagen im Einzelnen beschrieben.

In der Zeichnung zeigt die
- Figur 1: eine schematische Darstellung einer mit flächendeckend strahlenden Sender-/Empfangseinrichtungen ausgestatteten Verwaltungseinrichtung;
- Figur 2: eine schematische Darstellung gemäß Figur 1;
- Figur 3: eine schematische Darstellung einer gemäß den Figuren 1 und 2 ausgestatteten Verwaltungseinrichtung;
- Figur 4: eine schematische Darstellung einer mit lediglich im Bereich der Ein- und Ausgänge ihrer einzelnen Bereiche angeordeneten Antennen von Sender-/Empfänger ausgestatteten Gesamtanlage ;
- Figur 5: eine schematische Darstellung der Zentrale einer Verwaltungseinrichtung für Schubgepäckwagen.

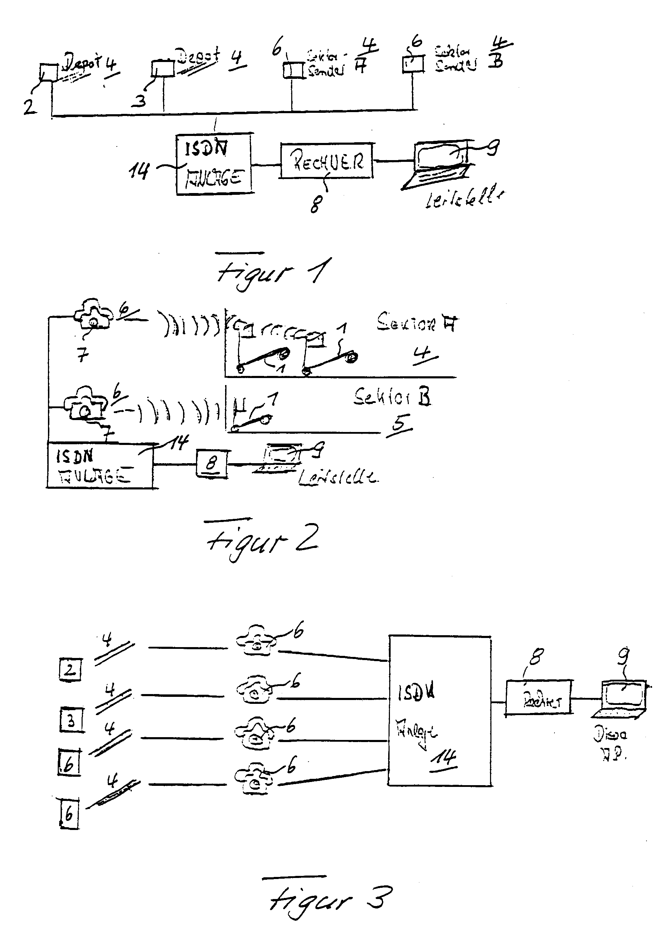

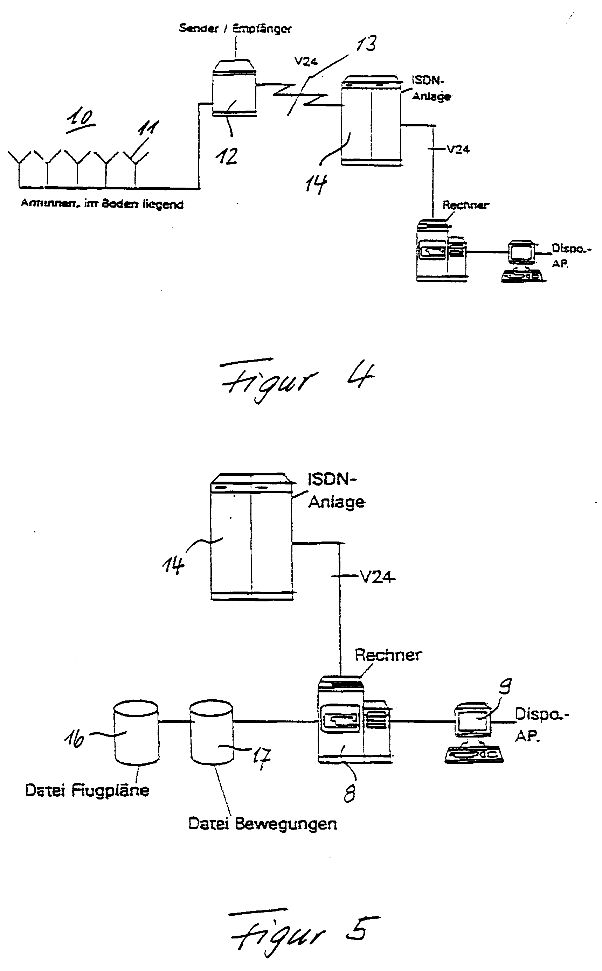

Bei der in den Figuren 1 bis 3 dargestellten Ausführungsform sind die einzelnen Schubgepäckwagen 1 jeweils mit einer im Einzelnen nicht gezeigten, auf einer Platine angeordneten, insbesondere einem sog. Chip, und innerhalb des Rahmens der Schubgepäckkarre gegen mechanische Beschädigung von außen und Manipulation geschützt untergebrachten Empfänger-/Sendereinheit ausgestatet, wobei der Sender der Empfänger-/Sendereinheit jeweils derart kodiert ist, daß er lediglich ein einziges, die Identitität des Wagens bestimmendes Antwortsignal ausstrahlen kann und wobei ferner eine Einrichtung zur Umwandlung der von Empfänger aufgefangenen Senderleistung in eine Energie zum Betrieb des bordeigenen Senders des Schubgepäckwagens vorhanden ist. Gemäß der Figur 1 kann dabei vorgesehen sein, daß Sender-/Empfänger 2 bzw. 3 zum einen an den Sammel-und Bereitstellungsstellen 4 für die Schubgepäckwagen 1 und zum anderen in sonstigen Bereichen 4 bzw. 5 der Gesamtanlage angeordnet sein können, falls wenigstens die stationären Sender 6 jeweils flächendeckend abstrahlen.
Wie insbesondere aus der Darstellung der Figuren 2 und 3 ersichtlich können die Sender-/Empfangseinheiten dabei mit in den einzelnen Bereichen 4 und 5 der Gesamtanlage ohnehin vorhandenen Fernsprecheinrichtungen 7 derart gekoppelt sein, daß zum einen ihre Energieversorgung und zum anderen der Weiterleitung der aufgefangenen Antwortsignale im Bereich der Gesamtanlage ohnehin vorhandene Leitungsnetze, z.B. das Fernsprechleitungsnetz, verwendet werden, wobei gleichzeitig auch die zum Fernsprechnetz gehörige und ebenfalls ohnehin vorhandene ISDN-Anlage 14 verwendet wird, um die Weiterleitung der von den Empfängern der Sende-/Empfangsanlagen insgesamt aufgefangenen Antwortsignale der einzelnen Schubgepäckwagen an eine zentrale Rechnereinheit 8 zu bewerkstelligen. An die Rechnereinheit 8 ist dann schließlich ein Bildschirm 9 als Anzeige-und Arbeitsplatzeinheit angeschlossen.

Bei dem in der Figur 4 dargestellten Ausführungsform sind an den Ein-und Ausgängen der einzelnen Bereiche 10 der Gesamtanlage jeweils Sender- und Empfangsantennen 11 angeordnet, welche entweder als Schleifen im Boden verlegt oder aber in sonstiger, das Befahren der Gesamtanlage nicht behindernden Weise an den sonstigen Bestandteilen der bestehenden Gesamtanlage angebracht sind. Die den einzelnen Bereichen der Gesamtanlage zugeordneten Sender-/Empfängereinheiten 12 sind vermittels einer V24 Schnittstelle 13 an die in der Gesamtanlage ohnehin vorhandene ISDN-Anlage 14 angeschlossen, vermittels derer die empfangenen Antwortsignale der einzelnen Schubgepäckwagen dann der zentralen Recheneinheit 8 zugeführt werden.
Wie insbesondere aus der Darstellung der Figur 5 weiterhin erkennbar kann an die zentrale Recheneinheit 8 zusätzlich eine die Flugpläne enthaltende Datei 16 und eine die Bewegungen der Schubgepäckwagen, insbesondere für statistische Zwecke speichernde Datei 17 angeschlossen sein.

Die im Vorstehenden im Einzelnen hinsichtlich einer Anwendung auf Flug-oder Bahnhöfen beschriebene Verwaltungseinrichtung kann selbstverständlich auch in anderen Anlagen eingesetzt werden, falls vergleichbare Verhältnisse vorliegen, d.h. falls die durch die Passanten oder Kunden begehbare und damit auch mit den Wagen befahrbare Anlage weitläufig und unübersichtlich ist und daher die zeit- und ortsgerechte Bereitstellung von Schub-oder sonstigen Transportwagen einen erheblichen Aufwand, insbesondere Personalaufwand, erfordert.

## Patentansprüche

1. Verwaltungseinrichtung für Schubgepäckwagen, insbesondere in weitläufigen und unübersichtlichen, aber mit einem Telefonnetz ausgestatteten Anlagen, wie Flughäfen, Bahnhöfen und dergl., in welchen für die Passagiere ankommender Massenverkehrsmittel jeweils am Ankunftsort und zur Ankunftszeit des Massenverkehrsmittels eine ausreichende Anzahl von Schubgepäckwagen zum Transport ihres Gepäckes zum Individualverkehrsmittel bereitgestellt werden muß, dadurch gekennzeichnet, daß jeder Schubgepäckwagen mit einer passiven, als kodierbare Kompakteinheit, z.B. auf einer Platine angeordneten, insbesondere als sog. Chip, ausgebildeten Empfänger-/ Sendereinheit, deren Senderteil zur Abgabe lediglich eines einzigen Erkennungs-Signales ausgestattet ist und daß die Gesamtfläche der Anlage in einzelne Bereiche unterteilt ist, deren jede mit einem stationären, an eine Fernsprecheinrichtung bzw. deren Leitungsnetz angeschlossenen Sender-/Empfänger ausgestattet ist, wobei die Sender-/ Empfänger der einzelnen Bereiche vermittels des Fern- sprechleitungsnetzes an eine zentrale Datenerfassungs- und verarbeitungsanlage angeschlossen sind.

2. Verwaltungseinrichtung nach Anspruch 1, dadurch gekennzeichnet, daß zwischen die Sender-/ Empfängereinheiten der einzelnen Bereiche der Anlage und das den Weitertransport der eingehenden Antwortsignale der einzelnen Schubgepäckwagen zur Datenerfassungs-und Verarbeitungsanlage vermittelnde Leitungsnetz jeweils eine V24 Schnittstelle eingeschaltet ist.

3. Verwaltungseinrichtung nach Anspruch 1 und 2, dadurch gekennzeichnet, daß die bordeigene Empfänger-/Sendereinheit jedes Schubgepäckwagens eine Einrichtung zur Umsetzung der eingehenden Funkwellenenergie in eine Energieversorgung für den Senderteil ausgestattet ist.

4. Verwaltungseinrichtung nach einem der Ansprüche 1 bis 3, dadurch gekennzeichnet, daß die bordeigenen Empfänger-/Sendereinheiten der Schubgepäckwagen mit einer in den Rahmen des Wagens integrierten Antenne ausgestattet sind.

5. Verwaltungseinrichtung nach einem der Ansprüche 1 bis 4, dadurch gekennzeichnet, daß die bordeigene Empfänger-/Sendereinheit jedes Schubgepäckwagens gegen eine mechanische Beschädigung von außen sowie gegen Manipulation geschützt, insbesondere in dessen Rahmen untergebracht ist.

6. Verwaltungseinrichtung nach einem der Ansprüche 1 bis 5, dadurch gekennzeichnet, daß stationäre Sender-/Empfängereinheiten lediglich an Sammel-und/oder Bereitstellungsräumen oder Einrichtungen, insbesondere jeweils an der Annahmeeinrichtung von mit einem Pfandmünzwerk ausgestatteten Depots angeordnet sind und die Pfandmünzrückgaheeinrichtung jeder Annahmestelle ausschließlich durch das Sendesignal eines Wagens ansteuerbar ist.

7. Verwaltungseinrichtung nach einem der Ansprüche 1 bis 6, dadurch gekennzeichnet, daß die stationären Sender-/Empfängereinheiten mit in den einzelnen Bereichen der Anlage aufgestellten Fernsprecheinrichtungen gekoppelt und an deren Leitungsnetz angeschlossen sind und daß gleichzeitig auch die zentrale Datenverarbeitungsanlage an das Fernsprechleitungsnetz der Anlage angeschlossen ist.

8. Verwaltungseinrichtung nach einem der Ansprüche 1 bis 7, dadurch gekennzeichnet, daß die zentrale Datenverarbeitungsanlage eine Rechnereinheit zur Erfassung einerseits der Flug-oder fahrplanbedingten Bereitstellungsanforderungen und andererseits zur Erfassung der momentanen Standorte der Schubgepäckwagen sowie eine Vergleichs- und eine Informationausgabeeinrichtung, insbesondere eine Bildschirmanzeige, umfasst.

9. Verwaltungseinrichtung nach einem der Ansprüche 1 bis 8, dadurch gekennzeichnet, daß die in den einzelnen Bereichen der Anlage angeordneten stationären Sender-/Empfängereinheiten mit in bauliche Bereiche der Anlage integrierten oder auf diese aufgesetzten, gegebenenfalls verkleideten Antennen ausgestattet sind.

## Claims

1. Management device for luggage trolleys, in particular in large installations, which are extensive and not easily overseen, but are equipped with a telephone network, such as airports, railway stations and similar, in which an adequate number of luggage trolleys must be made available for the passengers of incoming public transport means at the respective point of arrival and time of arrival of the public transport means for transport of their luggage to the individual transport vehicle, characterised in that each luggage trolley is equipped with a passive receiver/transmitter unit in the form of a compact unit, which may be encoded, e.g. one arranged on a board, in particular in the form of a chip, in which the transmitter part is fitted to transmit only a single identification signal; and that the total area of the installation is divided into individual zones, each of which being equipped with a fixed transmitter/receiver connected to a telephone system or to its network, the transmitter/receiver units of the individual zones being connected to a central data entry or data processing system.

2. Management device according to Claim 1, characterised in that a V24 interface is connected between each of the transmitter/receiver units of the individual zones of the installation and the network switching the onward transport of incoming response signals of individual luggage trolleys to the data entry and processing system.

3. Management device according to Claims 1 and 2, characterised in that the receiver/transmitter unit on-board each luggage trolley is equipped with a system for converting the incoming radio wave energy into a power supply for the transmitter part.

4. Management device according to one of Claims 1 to 3, characterised in that the receiver/transmitter units on-board the luggage trolleys are equipped with an aerial integrated into the frame of the trolley.

5. Management device according to one of claims 1 to 4, characterised in that the receiver/transmitter unit on-board each luggage trolley is protected from mechanical damage from the outside and against manipulation, in particular is housed in the frame thereof.

6. Management device according to one of Claims 1 to 5, characterised in that fixed transmitter/receiver units are arranged only at collection and/or supply areas or points, in particular at the receiving point of storage areas fitted with a refundable coin mechanism, and the coin return system of each receiving point may be actuated only by the transmitted signal of a trolley.

7. Management device according to one of Claims 1 to 6, characterised in that the fixed transmitter/receiver units are coupled to telephone systems installed in the individual zones of the installation and are connected to their network; and that at the same time the central data processing system is also connected to the telephone network of the installation.

8. Management device according to one of Claims 1 to 7, characterised in that the central data processing system comprises a computer unit for entry of the trolley supply requirements determined by the timetable as well as for entry of the current locations of the luggage trolleys, and also comprises a comparator and information output system, in particular a video display unit.

9. Management device according to one of Claims 1 to 8, characterised in that the fixed transmitter/receiver units disposed in the individual zones of the installation are equipped with aerials, which are integrated into structural zones in the installation or attached onto these, and are optionally encased.

## Revendications

1. Dispositif de gestion pour chariots roulants à bagages, en particulier pour des installations de grandes dimensions sans visibilité d'ensemble, telles que des aéroports, des gares ou des installations similaires, dans lesquelles il est nécessaire de mettre à la disposition des passagers des moyens de transport collectifs un nombre suffisant de chariots roulants à bagages à l'endroit et à l'heure d'arrivée du moyen de transport collectif afin de permettre le transfert des bagages vers le moyens de transport individuel, *caractérisé en ce que* chaque chariot roulant à bagages est équipé d'un émetteur/récepteur passif constitué d'une unité compacte codée disposée par exemple sur une platine, plus particulièrement une puce, dont la partie émettrice est conçue pour émettre un seul signal de reconnaissance et *en ce que* la surface totale de l'installation est divisée en zones individuelles dont chacune est équipée d'une unité émettrice/réceptrice fixe, reliée à l'installation téléphonique, respectivement à son réseau de câbles, lesdits émetteurs/récepteurs des zones individuelles étant reliées à une unité centrale de saisie et de traitement des données.

2. Dispositif de gestion selon la revendication 1 *caractérisé en ce que* une jonction V24 est intercalée entre les unités émettrices/réceptrices des zones individuelles de l'installation et le réseau de lignes assurant la transmission des signaux de réponse entrants de chaque chariot roulant à bagages vers l'unité centrale de saisie et de traitement des données.

3. Dispositif de gestion selon les revendications 1 et 2 *caractérisé en ce que* l'émetteur/récepteur de chaque chariot roulant comporte un élément de transformation de l'énergie des ondes radio entrantes en énergie alimentant la partie émettrice.

4. Dispositif de gestion selon l'une des revendications 1 et 3 *caractérisé en ce que* l'émetteur/récepteur de chaque chariot roulant est équipé d'une antenne intégrée dans le châssis du chariot.

5. Dipositif de gestion selon l'une des revendications 1 et 4 *caractérisé en ce que* l'émetteur/récepteur de chaque chariot roulant, qui est protégé contre toute détérioration mécanique de l'extérieur et contre des manipulations, est logé plus particulièrement dans le châssis du chariot.

6. Dispositif de gestion selon l'une revendications 1 et 5 *caractérisé en ce que* les unités émettrices/réceptrices fixes sont installées uniquement aux emplacements de collecte et/ou de mise à disposition des chariots, en particulier à la station de réception des dépôts équipés d'un mécanisme de consigne par pièces de monnaie et *en ce que* le dispositif de restitution de la pièce de monnaie de consigne de chaque station de réception ne peut être actionné que par le signal émis par un chariot roulant.

7. Dispositif de gestion selon l'une des revendications 1 à 6 *caractérisé en ce que* les unités émettrices/réceptrices fixes sont couplées avec des installations téléphoniques prévues dans les zones individuelles et connectées au réseau des lignes téléphoniques et *en ce que* simultanément l'unité centrale de traitement des données est connectée au réseau des lignes téléphoniques.

8. Dispositif de gestion selon l'une des revendications 1 à 7 *caractérisé en ce que* l'unité centrale de traitement des données inclut un ordinateur permettant de saisir, d'une part, les conditions de mise à disposition en fonction des horaires des moyens de transport, et, d'autre part, les endroits où se trouvent momentanément les chariots, ainsi qu'un dispositif de comparaison et de sortie d'informations, plus particulièrement un écran.

9. Dispositif de gestion selon l'une des revendications 1 à 8 *caractérisé en ce que* les émetteurs/récepteurs prévus dans les zones individuelles de l'installation sont pourvus d'antennes, éventuellement recouvertes, intégrées dans ou disposées sur des éléments faisant partie des constructions de l'installation.
